# EUROPEAN PATENT APPLICATION

(11) **EP 1 319 830 A1**
(43) Date of publication of application: **18.06.2003**
(21) Application number: 00962555.9
(22) Date of filing: 21.09.2000
(51) Int. Cl.: F03D 1/00, F03D 11/04, H02K 1/16, H02K 1/26

(54) **MULTIPOLAR AEROGENERATOR**

(30) Priority: 18.10.1999 ES 9902285
(71) Applicant: Torres Martinez, Manuel, E-31007 Pamplona (ES)
(72) Inventor: Torres Martinez, Manuel, E-31007 Pamplona (ES)
(74) Representative: Evens, Paul Jonathan
(86) International application number: ES0000353
(87) International publication number: WO01029413

(57) **Abstract**

Multipolar aerogenerator consisting of a functional set (1) comprising a wind rotor (3) associated to an electrical generator rotationally assembled on a bearing column in which the wind rotor (3) is fixed to the end of an axle (5) that is mounted by means of two supports (6) which are fixed inside a locating casing (8) comprising the stator (9) of the electric generator. The rotor (10) of said generator is mounted on the axle (5) between the two supports (6), the locating casing (8) defining a conical projection (25) that makes it possible to fix a rotational cylindrical collar on the end of the bearing column.

## Description

The ecological character that characterizes the aeolic energy makes that the mentioned energy is used more and more as driving means for the production of electricity, employing the so called aerogenerators as the means to produce electricity.

The mentioned aerogenerators consist in a general way in a rotor with blades, by means of which advantage is taken of the wind force to get a revolving action and in an electricity producing generator, whose turning operation is activated by the rotor blades operated by the wind.

Under this concept multiple structural solutions have been developed of the mentioned aerogenerators, looking for the assembly determination which eases up as much as possible the construction and the assembly, in connection with the possibility to use generators whose characteristics of size and power make the installation profitable.

In accordance with this, according to the present invention, an aerogenerator is proposed, developed according to some constructive and functional features which make it particularly advantageous for its function.

This aerogenerator, object of the invention, includes a rotor with blades to which a axle is connected axially included in a rotating assembly through two fixing supports which are established in fixed fastening with respect to a housing whose inside incorporates the stator of a multipolar generator, while on the central axle the rotor of the mentioned generator is included, determining the housing at its lower part a projection which is joined to a neck by means of which the corresponding orientation connection with respect to the bearing column of the aerogenerator is established.

In connection with the rotor of the multipolar generator provisional operating means are included to move the mentioned rotor into position, the mentioned means are situated on one of the operating axle assembly supports.

The stator of the generator is made up of an annular plate packaging respect to which the corresponding electric windings are incorporated while the rotor is made up of a series of coils on which externally the respective windings of the multipolar set are incorporated, including inside each of the mentioned coils a core made up of a package of foils.

This way an aerogenerator is obtained whose set has a very simple construction and with some structural conditions which make the assembly easy, even for the big power aerogenerators, determining some optimum economic features and a good functional yield.

In view of all this, the preconized aerogenerator has some really advantageous features, acquiring its realization preferable character and own life respect to other presently existing aerogenerators.

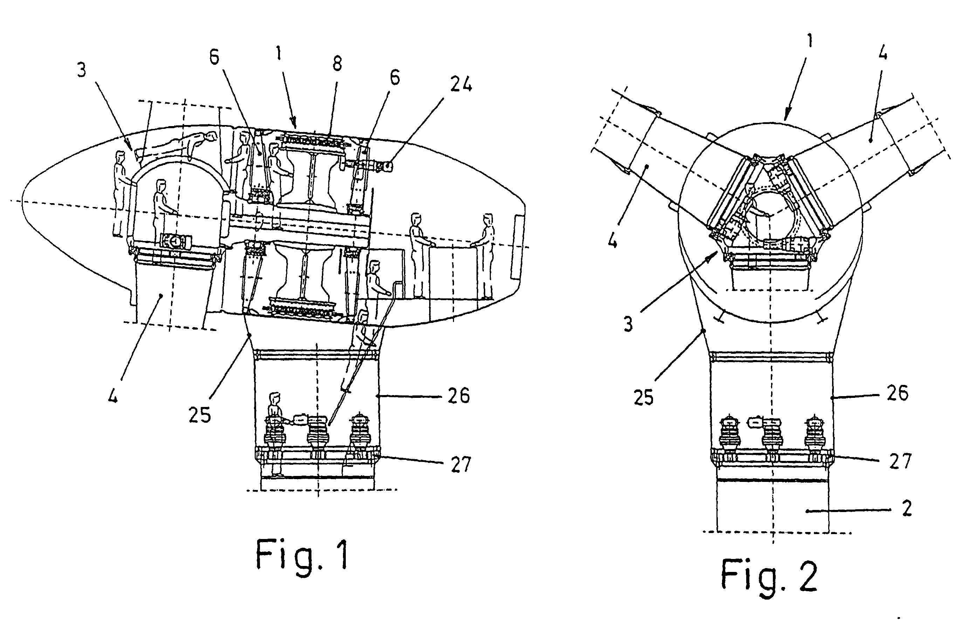

Figure 1 shows a schematic side view of the functional set of the preconized aerogenerator, showing the inside elements.

Figure 2 is a front view regarding the previous figure.

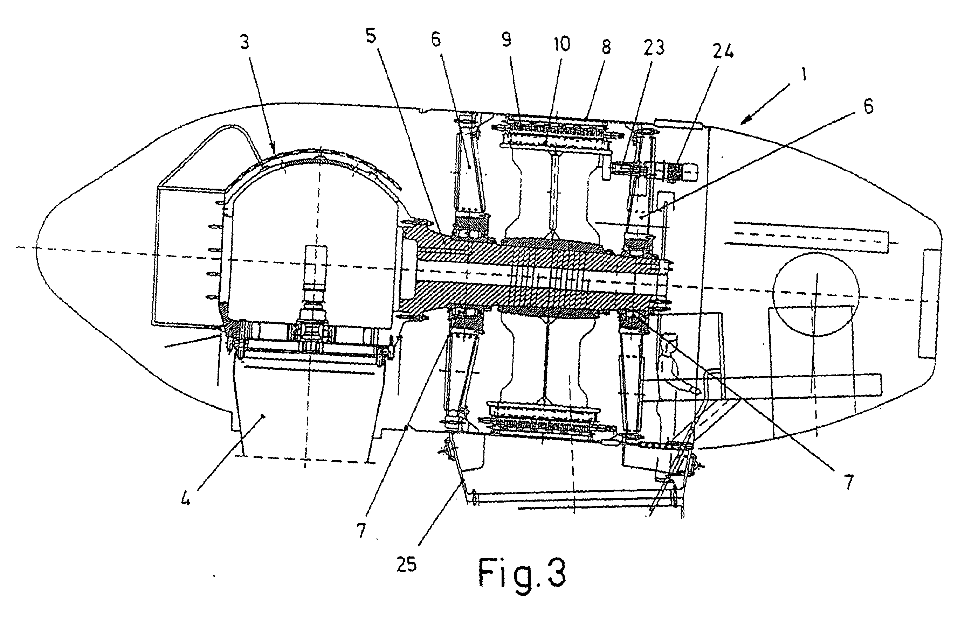

Figure 3 is a side view in enlarged section of the same functional aerogenerator set.

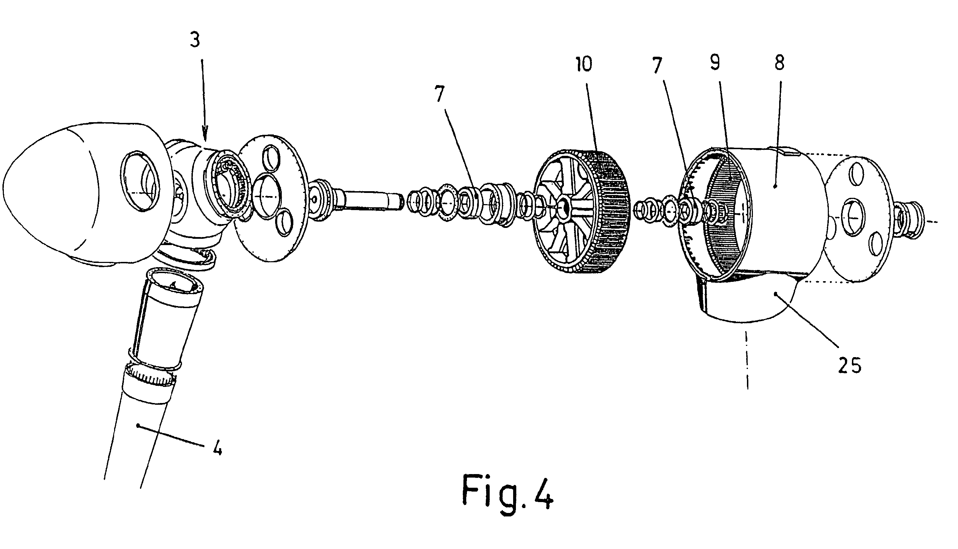

Figure 4 is an exploded perspective of the mentioned functional aerogenerator set.

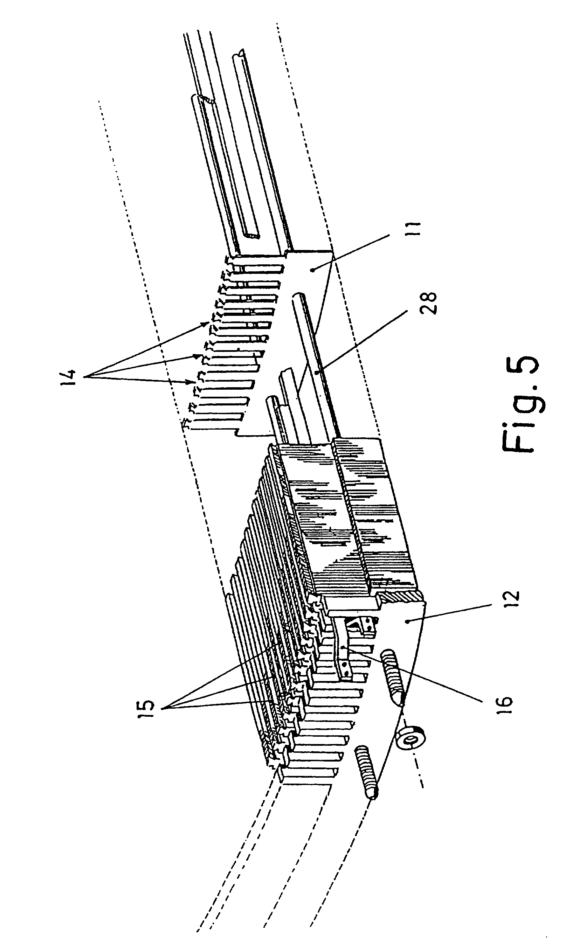

Figure 5 is a partial detail of the constructive realization of the stator of the electric generator of the aerogenerator.

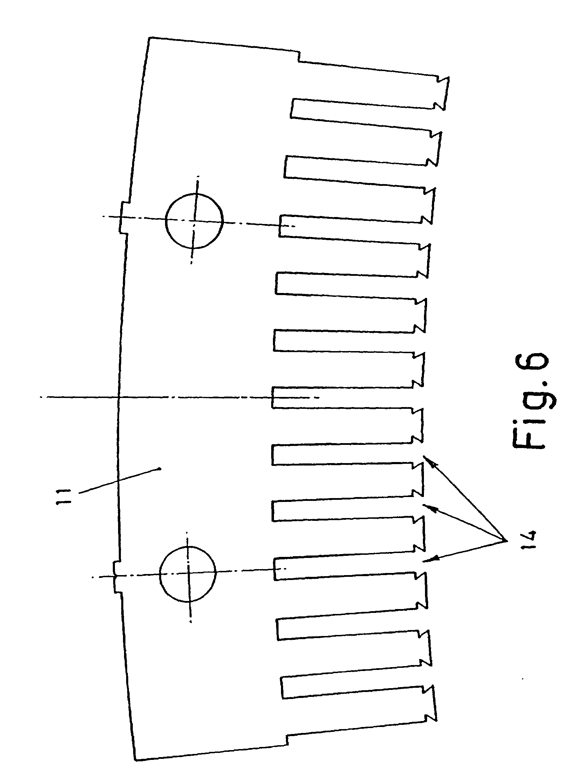

Figure 6 represents the shape of a component foil of the mentioned stator body of the generator.

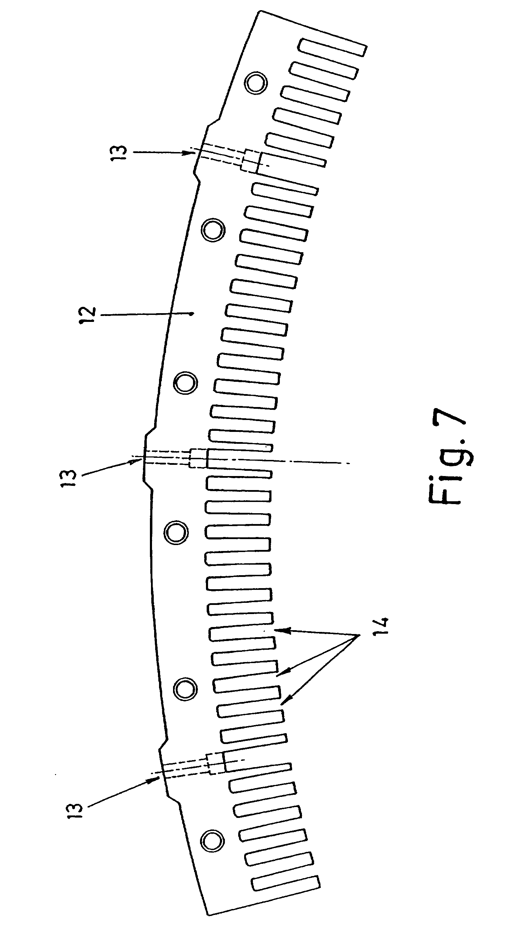

Figure 7 is the representation of an extreme tensioning sector of the packaging of the stator body of the generator.

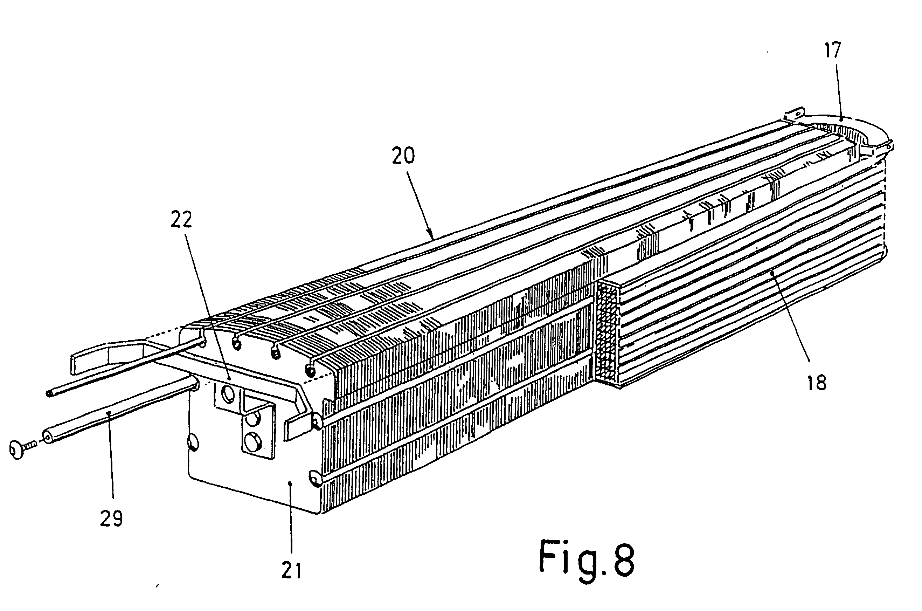

Figure 8 is a partial detail of the realization of a component element of the rotor corresponding to the electric generator of the aerogenerator.

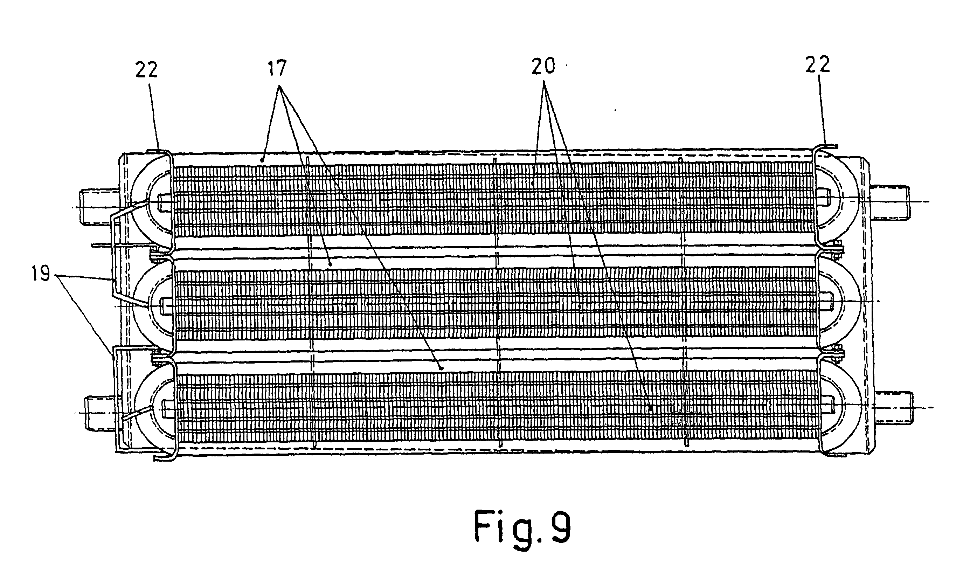

Figure 9 is a view in plant of a partial set of the mentioned rotor of the generator.

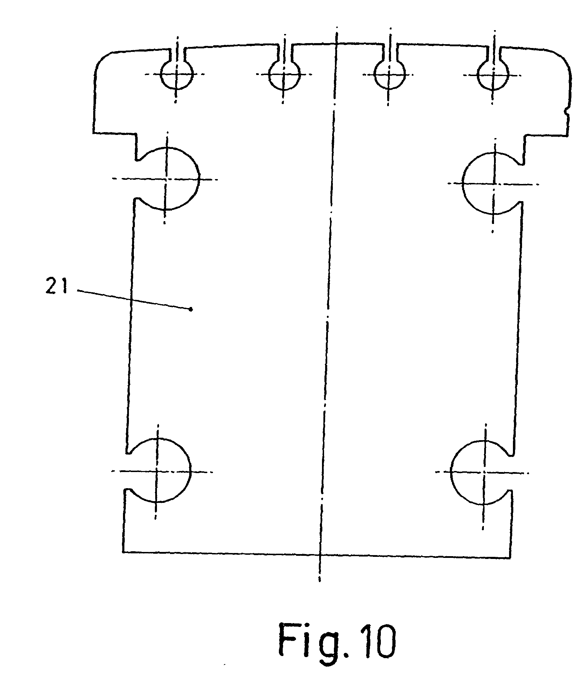

Figure 10 represents the shape of a component blade of the packaging of the core of an element of the rotor of the electric generator.

Figure 11 is a representation of the body hoisting of the functional set by means of a structure of an accessory crane situated on the end of the bearing column, in the aerogenerator assembly.

The invention refers to an aerogenerator of the ones used to produce electric energy taking advantage of the wind force, including for this a functional set (1) which is situated at the upper part of the bearing column (2).

The functional set (1) consists in a wind rotor (3) provided with blades (4) for the wind catching as the impulsion means for the revolving operation, being the mentioned wind rotor (3) situated axially joined to the end of a axle (5).

On the other hand the axle (5) is situated in axial assembly through two supports (6), in connection with which the mentioned axle (5) remains in rotating connection by means of the respective rollers (7) which assure the fastening with freedom of rotation.

The supports (6) are fastened in a fixed way with respect to the housing (8) which at the inside includes the stator (9) of a multipolar generator, whose corresponding rotor (10) is incorporated in a fixed way on the shaft (5) between the supports (6).

The stator (9) of the multipolar generator is made up of an annular packaging of foils (11) whose set is fixed by means of longitudinal bars (28), being closed at their ends by means of respective seizing sector sets (12) through which the fastening is established with regard to the housing (8) through screwing (13), determining the packaging lengthwise some grooves (14), in which the windings (15) of the electric set are included and whose union is established by means of connection bars (16).

The rotor (10) of the mentioned generator is made up of a group of coils (17) on which the corresponding windings are incorporated outwardly (18), which are joined in series by means of connections (19) while at the inside of each coil a core (20) is incorporated made up of a packaging of foils (21), whose set is fixed by means of longitudinal bars (29), joining the cores (20) of all the coils (17) in successive connection by means of some plates (22).

In connection with the rotor (10) moreover means (23) are included for a provisional operation for a positioning rotation of the mentioned rotor (10) or the wind rotor (3), when it is necessary, being it possible that these means (23) are operated manually, even though in a preferred way in connection with them, an actuating engine (24) is incorporated. The mentioned means (23) are situated in the assembly as well as the respective engine (24), incorporated on one of the supports (6) to fasten the axle (5).

The housing (8) determines at the lower part a conical projection (25), to which a cylindrical neck (26) is joined, by means of which a rolling union (27) is established with respect the bearing column (2), in the way that the functional set (1) of the aerogenerator is directional to situate the wind rotor (3) in such a position to take the maximum advantage of the wind.

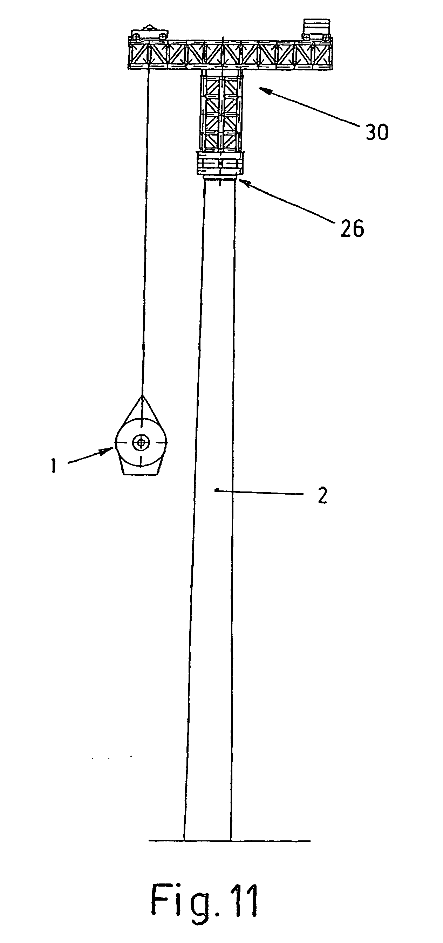

The neck (26) allows moreover to incorporate in a provisional way by means of clamps a crane structure (30) on the column top itself (2), for the hoisting of the component parts of the functional set (1) during the assembly of the aerogenerator, as it can be observed on figure 11, with which the movement of big mobile cranes to the installation site is not necessary to carry out the assembly, getting a considerable saving of expenses and greater possibilities for the installation of aerogenerators in mountainous areas with difficult access.

## Claims

1. Multipolar aerogenerator, of the kind made up of a functional set (1) which includes a wind rotor (3) associated to an electric generator, in revolving incorporation on a bearing column (2), **characterized in that** the wind rotor (3) is situated axially joined on the end of a axle (5), which is included in revolving assembly through the two supports (6) which are established fastened with respect to a housing (8), which has fixed inside the stator (9) of an electric multipolar generator, whose corresponding rotor (10) is incorporated in fixed disposition on the axle (5) between the two supports (6); determining the housing (8) a lower projection (25), to which a neck (26) is added by means of which the revolving connection is established on the bearing column (2).

2. Multipolar aerogenerator, according to the first claim, **characterized in that** in connection with the rotor (10) of the electric generator means are included (23) for a provisional revolving positioning operation of the mentioned rotor (10) or of the wind rotor (3), establishing the mentioned means (23) incorporated on one of the axle (5) fastening supports (6).

3. Multipolar aerogenerator, according to the first claim, **characterized in that** the stator (9) of the electric generator is made up of an annular packaging of plates (11), whose set is closed at the ends by means of some tightening sectors (12), through which the fastening is established by means of screwing (13) with respect to the housing (8).

4. Multipolar aerogenerator, according to the first claim, **characterized in that** the rotor of the electric generator is made up of a series of coils (17), at the inside of which a core is included, made up of a package of foils (21), whose set is caught at the ends by means of blades (22) between which a successive union is established of the whole component set.

5. Multipolar aerogenerator, according to the first claim, **characterized in that** the housing (8) which houses inside the stator (9) of the electric generator, determines at its lower part a conical projection (25), by means of which the fastening on the rotating cylindrical neck (26) is established on the end of the bearing column (2), regarding which the neck (26) can be connected in a provisional way by means of embracing a crane structure (30), for the hoisting of the component parts of the functional set (1) during the aerogenerator assembly.
